# EUROPEAN PATENT SPECIFICATION

(11) **EP 0 477 142 B1**
(45) Date of publication and mention of the grant of the patent: **11.06.1997**
(21) Application number: 91830342.1
(22) Date of filing: 31.07.1991
(51) Int. Cl.: F16B 41/00, F16B 21/16, F16B 43/00

(54) **Locking washer**
Sicherungsring
Rondelle de retenue

(30) Priority: 31.07.1990 IT 2159190 U
(43) Date of publication of application: 25.03.1992
(73) Proprietor: GIA S.r.l., I-28069 Trecate (Novara) (IT)
(72) Inventor: Guaglio, Antonio, c/o GIA S.r.l., I-28069 Trecate (Novara) (IT)
(74) Representative: Cicogna, Franco

(56) References cited:
- DE-B- 1 111 462
- DE-C- 841 085
- DE-C- 955 101
- DE-U- 1 937 929
- GB-A- 1 146 254
- "Industrial Fasteners Handbook", 3rd edition, 1985, pages 118-119, Trade & Technical Press, Morden, GB

## Description

### BACKGROUND OF THE INVENTION

The present invention relates to a locking washer which is applied to a threaded element in order to prevent the element from disengaging from a hole provided on an element to be restrained.

As is known, a problem encountered as mechanical pieces must be coupled by screws, bolts or threaded elements in general is that the threaded element can accidentally disengage from the through-going hole into which it must be set before coupling the nut or the like.

This drawback frequently occurs in a case in which an element must be set at an unconfortable position, which generally requires complex operations susceptible to cause the screw to accidentally disengage.

The document GB-A-1146254 discloses washers of metal or plastics having a central opening with circumferential teeth and a circular outer edge, whereas the documents DE-955101 and "Industrial Fasteners Handbook" disclose metal washers with a circular opening and various shapes of the external periphery.

### SUMMARY OF THE INVENTION

Accordingly, the main object of the present invention is to overcome the above mentioned drawback, by providing a locking washer directly applied on a threaded element to be inserted into a throughgoing hole, for restraining the threaded element and preventing it from being accidentally disengaged.

Another object of the present invention is to provide a locking washer applied to bolts, screws and the like threaded elements, which can be easily and quickly assembled on clamping collars, plates or metal sheet elements and engaged in a throughgoing hole therein.

The locking washer is very simple construction-wise, very reliable in operation, and can be easily made starting from commercially available elements and materials and, moreover, is very competitive from a mere economic standpoint.

According to the present invention, the above mentioned objects, as well as yet other objects, which will become more apparent hereinafter, are achieved by a locking washer and threaded element assembly according to the claim.

### BRIEF DESCRIPTION OF THE DRAWINGS

Further characteristics and advantages of the invention will become more apparent from.the following detailed disclosure of a preferred, though not exclusive, embodiment thereof, which is illustrated, by way of an indicative but not limitative example, in the figures of the accompanying drawings, where:

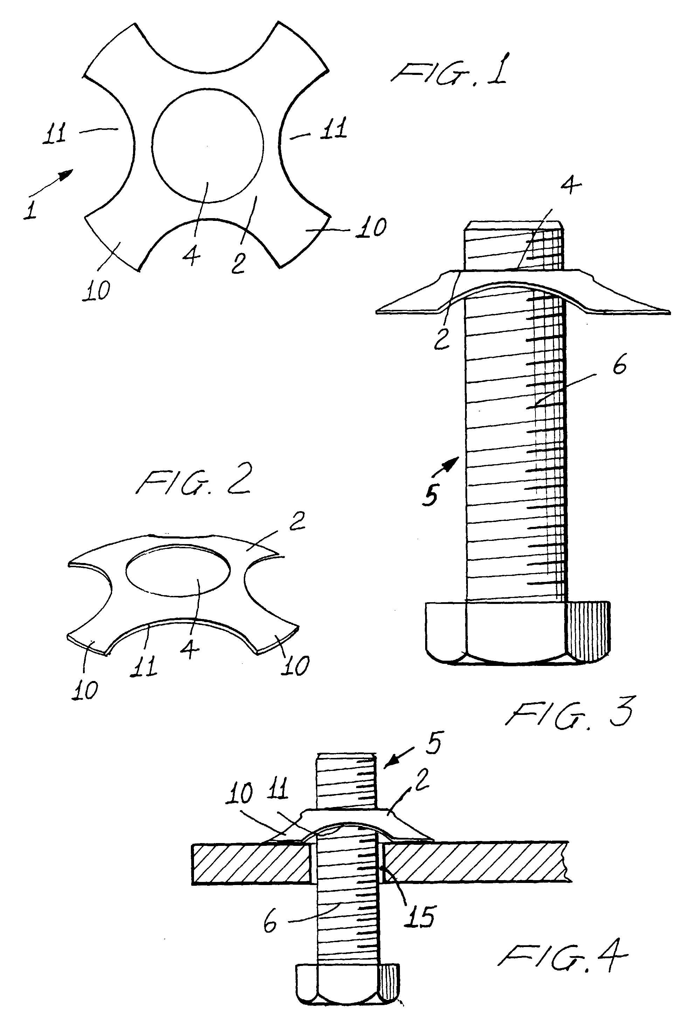

Figure 1 is a schematic top plan view of the locking washer according to the invention;
Figure 2 is a perspective view of the locking washer according to the invention;
Figure 3 shows the locking washer applied to a bolt element;
Figure 4 shows the locking washer applied to a bolt element, set in a throughgoing hole;
Figure 5 shows the locking washer applied to a bolt arranged on clamping collar elements; and
Figure 6 shows the locking washer applied to a bolt arranged within a hole formed through a plate.

### DESCRIPTION OF THE PREFERRED EMBODIMENT

With reference to the figures of the accompanying drawings, the locking washer applied on threaded elements for preventing said threaded elements from accidentally disengaging from a hole formed through an element to be restrained, which locking washer is generally indicated at the reference number 1, comprises a plate-like element 2 made of a thin plastic material sheet, for example a polyethylene sheet material, which is provided, at a central portion thereof, with an opening 4 suitable for force engaging on a threaded stem 5 of a screw, a bolt or any another threaded element, generically indicated at the reference number 6.

Owing to the force coupling thereof, the locking washer will be firmly coupled to the threaded element, so that the threaded element can not accidentally disengage from said locking washer.

The plate-like body 2 is provided with diametrical lugs 10, which are separated from one another by perimetrical cut-outs 11, so that the free end portions of the lugs 10 practically provide a bearing element, on the outer portion of the throughgoing hole 15, thereinto the threaded element will be introduced.

Owing to the small thickness of the plate-like body, the locking washer can be pre-assembled on the threaded element, which will be engaged in the throughgoing hole by slightly forcing it so as to cause the locking washer to be slightly deformed and pass through the throughgoing hole; in this connection it should be apparent that after having passed through the throughgoing hole, the locking washer will automatically return to its original size, so as to prevent a possible accidental disengaging from the hole.

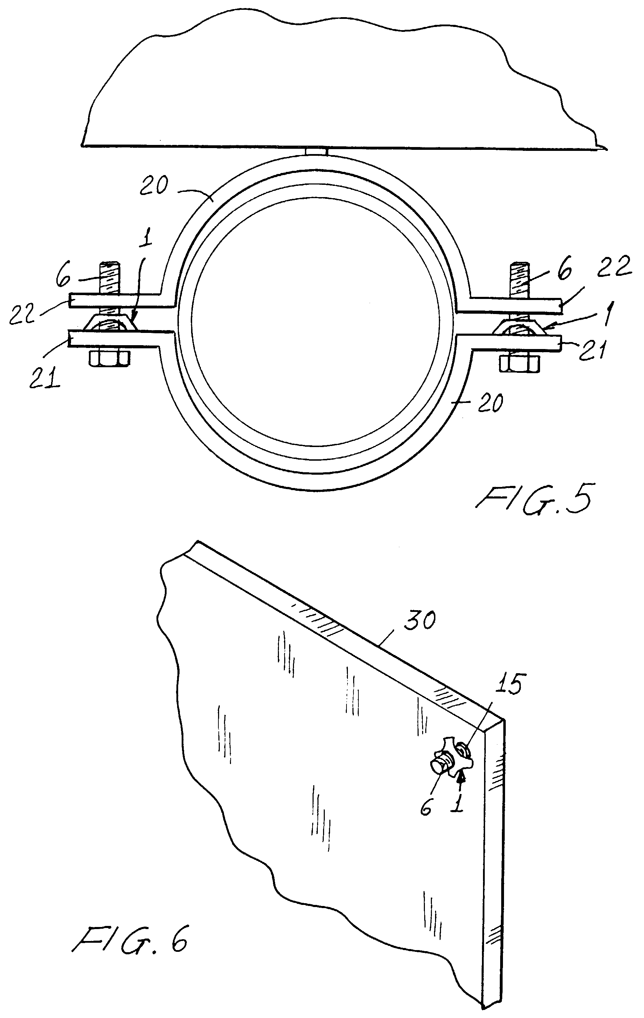

As schematically shown in figure 5, the disclosed arrangement can be used on clamping collars 20, in which the clamping bolt is engaged in advance through the portion of the collar provided with a throughgoing hole 21 and then is clamped by the thread provided on the other half of the collar 22.

A like situation is shown in figure 6, for the case in which the bolt is engaged on a metal plate, or the like, generally indicated at the reference number 30.

From the above disclosure it should be apparent that the invention fully achieves the intended objects.

In particular, it is pointed out that a very reduced cost locking washer has been provided, since the washer can be made by very simple and quick methods starting from a polyethylene plate material, the locking washer being adapted to be preset on the threaded element.

While the invention has been disclosed and illustrated with reference to a preferred embodiment thereof, it should be apparent that the disclosed embodiment is susceptible to several modifications and variations which come within the scope of the appended claim.

## Claims

1. A locking washer (1) and threaded element assembly for preventing said threaded element from accidentally disengaging from a throughgoing hole made through an element to be restrained, comprising a plate-like dished washer (2), of a thin plastic material, having a central circular opening (4) in which the threaded element (5) is forcibly engaged, and an outer peripheral edge which is provided with a plurality of bearing lugs (10) spaced from one another by cut-outs (11), so that said locking washer can be preassembled on said threaded element and the threaded element can be retained in said throughgoing hole by forcing said locking washer and the portion of the element carrying it through said hole, the washer being deformed thereby and then returning to its original size so that the lugs can be engaged outside of the throughgoing hole in which said threaded element (5) is arranged.

## Patentansprüche

1. Ein Zusammenbau aus einem Sicherungsring (1) und einem gewindeten Teil, der dieses gewindete Teil am versehentlichen Verlassen einer Bohrung in einem zu befestigenden Teil hindert und der eine gewölbte, plattenförmige Unterlegscheibe (2) aus einem dünnen Kunststoffmaterial mit einer zentralen kreisförmigen Öffnung (4) umfaßt, in die das gewindete Teil (5) unter Ausübung einer Kraft eingeführt wird, und mit einer äußeren, umgebenden Kante, die mit einer Vielzahl von stützenden Ansätzen (10) ausgestattet ist, die durch Aussparungen (11) voneinander getrennt sind, so daß dieser Sicherungsring auf dieses gewindete Teil vormontiert und das gewindete Teil in dieser Bohrung gehalten werden kann, indem dieser Sicherungsring und der Bereich des ihn tragenden Teiles durch diese Bohrung gezwungen werden, wodurch der Sicherungsring deformiert wird und er dann in seine ursprüngliche Größe zurückkehrt, so daß die Ansätze außerhalb der Bohrung, in der dieses gewindete Teil (5) angebracht ist, Halt finden.

## Revendications

1. Un assemblage constitué par une rondelle d'arrêt (1) et un élément fileté, destiné à empêcher que ledit élément fileté s'éloigne par inadvertance d'un trou de perçage formé dans un élément à fixer, et comprenant une rondelle bombée en forme de plaque (2), faite d'un mince matériau plastique, possédant au centre une ouverture circulaire (4), où est inséré l'élément fileté en appliquant une force, ainsi qu'un bord extérieur périphérique doté d'une multiplicité de rallonges de support (10) écartées entre elles par des évidements (11) de sorte que ladite rondelle d'arrêt peut être montée au préalable audit élément fileté et ledit élément fileté peut être fixé dans ledit trou de perçage en forçant ladite rondelle d'arrêt et la partie de l'élément portant celle-ci à travers ledit trou, la rondelle étant déformée par cette action et récupérant sa dimension initiale de sorte que les rallonges peuvent accrocher la partie externe du trou de perçage dans lequel est arrangé ledit élément fileté (5).
